# EUROPÄISCHE PATENTANMELDUNG

(11) **EP 2 055 468 A1**
(43) Veröffentlichungstag der Anmeldung: **06.05.2009**
(21) Anmeldenummer: 08163550.0
(22) Anmeldetag: 03.09.2008
(51) Int. Cl.: B29D 30/32, B29D 30/20

(54) **Verfahren zur Herstellung eines Fahrzeugluftreifens**

(30) Priorität: 31.10.2007 DE 102007051951
(71) Anmelder: Continental Aktiengesellschaft, 30165 Hannover (DE)
(72) Erfinder: Minx, Carsten, 31535 Neustadt (DE); Winkler, Jens, 30900 Wedemark (DE)
(74) Vertreter: Finger, Karsten

(57) **Zusammenfassung**

Verfahren zur Herstellung eines Fahrzeugluftreifens mit Laufstreifen, mit zwei Reifenseitenwänden, mit zwei Reifenwülsten und mit einer Karkasse (11) aus einer oder mehreren Lagen von in Kautschuk eingebetteten parallelen Festigkeitsträgern (12), die sich mit einem Hauptteil (16) der Karkasse (11) jeweils aus dem Erstreckungsbereich des Laufstreifens nach radial innen durch eine Reifenseitenwand hindurch bis in den Reifenwulst und in deren Verlängerung mit einem umgeschlagenen Teil (15) der Karkasse vom Reifenwulst nach radial außen erstreckt, wobei die Aufbaulage(n) zum Aufbau der Karkasse (11) auf der Mantelfläche eines rotationssymmetrischen Aufbaukörpers (1) aufgelegt werden, so dass sie sich über den gesamten Umfang des Aufbaukörpers (1) erstrecken, und wobei danach zumindest einer der beiden axial äußeren Erstreckungsbereiche der aufgelegten Karkassenlage(n) zur Bildung des Umschlages (15) in Richtung des dazwischenliegenden Hauptteiles (16) der Karkassenlagen zurückgefaltet wird, wobei
nach der Auflage der Aufbaulage(n) zum Aufbau der Karkasse (11) auf der Mantelfläche des rotationssymmetrischen Aufbaukörpers (1) der axial äußere Erstreckungsbereich der aufgelegten Karkassenlage(n) gegenüber dem zwischen den axial äußeren Erstreckungsbereichen liegenden Hauptteil (16) der Karkasse (11) um die Achse des Aufbaukörpers (1) verdreht wird.

## Beschreibung

Die Erfindung betrifft ein Verfahren zur Herstellung eines Fahrzeugluftreifens mit Laufstreifen, mit zwei Reifenseitenwänden, mit zwei Reifenwülsten und mit einer Karkasse aus einer oder mehreren Lagen von in Kautschuk eingebetteten parallelen Festigkeitsträgern, die sich mit einem Hauptteil der Karkasse jeweils aus dem Erstreckungsbereich des Laufstreifens nach radial innen durch eine Reifenseitenwand hindurch bis in den Reifenwulst und in deren Verlängerung mit einem umgeschlagenen Teil der Karkasse vom Reifenwulst nach radial außen erstreckt, wobei die Aufbaulage(n) zum Aufbau der Karkasse auf der Mantelfläche eines rotationssymmetrischen Aufbaukörpers aufgelegt werden, so dass sie sich über den gesamten Umfang des Aufbaukörpers erstrecken, und wobei danach zumindest einer der beiden axial äußeren Erstreckungsbereiche der aufgelegten Karkassenlage(n) zur Bildung des Umschlages in Richtung des dazwischen liegenden Hauptteiles der Karkassenlagen zurückgefaltet wird, sowie eine Vorrichtung zur Herstellung eines Fahrzeugluftreifens mit Laufstreifen, mit zwei Reifenseitenwänden, mit zwei Reifenwülsten und mit einer Karkasse aus einer oder mehreren Lagen von in Kautschuk eingebetteten parallelen Festigkeitsträgern, die sich mit einem Karkassenhauptteil jeweils aus dem Erstreckungsbereich des Laufstreifens nach radial innen durch eine Reifenseitenwand hindurch bis in den Reifenwulst hindurch erstreckt und in deren Verlängerung mit einem umgeschlagenen Teil vom Reifenwulst nach radial außen erstreckt.

Derartige Verfahren sind bekannt und werden üblicherweise zur Herstellung von Fahrzeugluftreifen eingesetzt. Dabei werden üblicherweise die Karkassenlagen auf die Mantelfläche einer zylindrischen Aufbautrommel aufgelegt, danach werden die Wulstkerne in die gewünschte axiale Position auf der Aufbautrommel konzentrisch zur Aufbautrommel bewegt, dort positioniert, und danach werden die axial außerhalb der beiden Wulstkerne erstreckten axialen Randbereiche der Karkasslagen mit Hilfe eines in der Aufbautrommeloberfläche ausgebildeten elastischen Balges, der von innen aufgebläht wird und dadurch radial expandiert, nach auf den zwischen den beiden Wulstkernen befindlichen Karkassenhauptteil zurückgefaltet. Die Festigkeitsträger der jeweiligen Karkassenlage weisen dann nach Fertigstellung des Fahrzeugreifens im Hauptteil der Karkasse und im Umschlag der Karkasse einen Verlauf mit jeweils gleichem Neigungswinkel zur Umfangsrichtung des Fahrzeugluftreifens jedoch mit unterschiedlicher Steigungsrichtung auf. Bei einer Radialkarkasse bedeutet dies, dass die Festigkeitsträger sowohl im Hauptteil der Karkasse als auch im Umschlagsteil der Karkasse im wesentlichen mit 90°-Neigungsverlauf zur Umfangsrichtung und somit in rein radialer Richtung verlaufen. Bei diesen Fahrzeugreifen werden daher häufig zur weiteren Versteifung des Fahrzeugreifens im Wulstbereich in Umfangsrichtung im Wulstbereich zusätzliche Wulstverstärkungsstreifen ausgebildet. Darüber hinaus ist bei derartigen Fahrzeugreifen eine individuelle Einstellung von speziellen Versteifungseigenschaften im unteren Seitenwandbereich nur beschränkt möglich. Bei Diagonalreifen, bei denen die Festigkeitsträger der Karkasslagen ebenfalls im Hauptteil der Karkasse und im Umschlag der Karkasse einen gleichen Neigungswinkel jedoch mit unterschiedlicher Steigungsrichtung aufweisen, ist bei derartigen Fahrzeugreifen eine individuelle Einstellung von speziellen Versteifungseigenschaften im unteren Seitenwandbereich nur beschränkt möglich.

Gelegentlich ist vorgeschlagen worden, Karkassfäden längs ihrer Erstreckung in der Karkasse mit verändertem Winkel zur Umfangsrichtung auszubilden.

So ist beispielsweise der DE-OS 2164366 und der DE-OS 2162546 eine Ausbildung eines Fahrzeugluftreifens mit einer Karkassenlage diagonaler Bauart zu entnehmen, die im Gürtelbereich einen abweichenden Neigungswinkel zur Umfangsrichtung aufweist, als im restlichen Erstreckungsbereich. Die Festigkeitsträger im Umschlag und im Hauptteil der Karkasse im Seitenwandbereich weisen jedoch auch bei diesen Fahrzeugreifen den gleichen Steigungswinkel mit unterschiedlicher Steigungsrichtung auf. Der DT-1680433C3 ist eine Ausbildung eines Fahrzeugluftreifens mit einer Karkassenlage zu entnehmen, die im Gürtelbereich und im Wulstbereich einen abweichenden Neigungswinkel zur Umfangsrichtung aufweist, als im oberen Seitenwandbereich. Die Festigkeitsträger im Umschlag und im Hauptteil der Karkasse im unteren Seitenwandbereich weisen jedoch auch bei diesen Fahrzeugreifen den gleichen Steigungswinkel mit unterschiedlicher Steigungsrichtung auf.

Der DE-OS2211163 kann ein Fahrzeugreifen entnommen werden, bei dem die Festigkeitsträger einer Karkassenlage in ihrem gesamten Erstreckungsbereich einen veränderten Winkelverlauf zur Umfangsrichtung und somit auch im Umschlag der Karkasse einen anderen Winkelverlauf zur Umfangsrichtung einnehmen als im Hauptteil der Karkasse. Hierzu sind die vorgefertigten Karkassenlagen bereits mit den dem gewünschten Verlauf entsprechend vorgeformten in Kautschuk eingebetteten Festigkeitsträgern ausgebildet und werden in diesem Zustand auf die Aufbautrommel aufgelegt. Nach Setzen der Wulstkern in die vorbestimmte Position auf der Aufbautrommel wird dann der axial außerhalb der Wulstkerne erstreckte Karkassenbereich mit Hilfe eines Balges zur Bildung des Umschlages um den Wulstkern zurückgefaltet. Die Karkassenlagen müssen bei dieser Fertigung bereits aufwendig mit dem gewünschten Verlauf der Festigkeitsträger ausgestattet werden. Dies ist fertigungsbedingt sehr aufwendig. Alle Schritte für Transport, Lagerung und Auflage der Karkasslage gefährden die voreingestellte Konturierung des Verlaufs der Festigkeitsträger in der Karkassenlage. Somit müssen gegebenenfalls weitere aufwendige Maßnahmen zur Reduktion unerwünschter Verformungen getroffen werden. Eine individuelle Feineinstellung entsprechend der Erfordernisse einzelner Reifen ist hierdurch - wenn überhaupt - nur sehr eingeschränkt möglich und nur für sehr große Losgrößen wirtschaftlich umsetzbar.

Der Erfindung liegt die Aufgabe zugrunde, in einfacher Weise eine individuelle Feineinstellung der Steifigkeit des unteren Seitenwandbereichs eines Fahrzeugluftreifens zu ermöglichen.

Erfindungsgemäß wird die Aufgabe durch das Verfahren zur Herstellung eines Fahrzeugluftreifens mit Laufstreifen, mit zwei Reifenseitenwänden, mit zwei Reifenwülsten und mit einer Karkasse aus einer oder mehreren Lagen von in Kautschuk eingebetteten parallelen Festigkeitsträgern, die sich mit einem Hauptteil der Karkasse jeweils aus dem Erstreckungsbereich des Laufstreifens nach radial innen durch eine Reifenseitenwand hindurch bis in den Reifenwulst und in deren Verlängerung mit einem umgeschlagenen Teil der Karkasse vom Reifenwulst nach radial außen erstreckt, wobei die Aufbaulage(n) zum Aufbau der Karkasse auf der Mantelfläche eines rotationssymmetrischen Aufbaukörpers aufgelegt werden, so dass sie sich über den gesamten Umfang des Aufbaukörpers erstrecken, und wobei danach zumindest einer der beiden axial äußeren Erstreckungsbereiche der aufgelegten Karkassenlage(n) zur Bildung des Umschlages in Richtung des dazwischen liegenden Hauptteiles der Karkassenlagen zurückgefaltet wird, gemäß den Merkmalen von Anspruch 1 gelöst, bei dem nach der Auflage der Aufbaulage(n) zum Aufbau der Karkasse auf der Mantelfläche des rotationssymmetrischen Aufbaukörpers jedoch vor oder während des Zurückfaltens des axial äußeren Erstreckungsbereichs der aufgelegten Karkassenlage(n) der axial äußere Erstreckungsbereich der aufgelegten Karkassenlage(n) gegenüber dem zwischen den axial äußeren Erstreckungsbereichen liegenden Hauptteil der Karkasse - insbesondere gesteuert - um die Achse des Aufbaukörpers verdreht wird .

Erfindungsgemäß wird die Aufgabe auch durch die Ausbildung einer Vorrichtung zur Herstellung eines Fahrzeugluftreifens mit Laufstreifen, mit zwei Reifenseitenwänden, mit zwei Reifenwülsten und mit einer Karkasse aus einer oder mehreren Lagen von in Kautschuk eingebetteten parallelen Festigkeitsträgern, die sich mit einem Karkassenhauptteil jeweils aus dem Erstreckungsbereich des Laufstreifens nach radial innen durch eine Reifenseitenwand hindurch bis in den Reifenwulst hindurch erstreckt und in deren Verlängerung mit einem umgeschlagenen Teil vom Reifenwulst nach radial außen erstreckt, mit einem rotationssymmetrischen Aufbaukörper, der um seine Rotationsachse drehbar in der Vorrichtung gelagert und mit gesteuerten Antriebsmitteln zum gesteuerten Verdrehen des Aufbaukörpers um seine Antriebsachse in Antriebsverbindung bringbar ist oder steht, mit Mitteln zum Auflegen der Aufbaulagen zum Aufbau der Karkasse auf der Mantelfläche des rotationssymmetrischen Aufbaukörpers derart, dass diese sich über den gesamten Umfang des Aufbaukörpers erstrecken, und mit gesteuerten Mitteln zum Zurückfalten des axial äußeren Erstreckungsbereichs der aufgelegten Karkassenlage(n) zur Bildung des Umschlages in Richtung des dazwischenliegenden Hauptteiles der Karkassenlagen, mit Mitteln zum - insbesondere gesteuerten - Verdrehen des axial äußeren Erstreckungsbereichs der aufgelegten Karkassenlage(n) gegenüber dem dazwischen liegenden Hauptteil der Karkasse um die Achse des Aufbaukörpers nach der Auflage der Aufbaulagen zum Aufbau der Karkasse auf der Mantelfläche des rotationssymmetrischen Aufbaukörpers jedoch vor oder während des Zurückfaltens, gemäß den Merkmalen von Anspruch 6 gelöst.

Durch einfaches Verdrehen der axial äußere Erstreckungsbereich der aufgelegten Karkassenlagen gegenüber dem dazwischen liegenden Hauptteil der Karkasse nach der Auflage der Aufbaulagen zum Aufbau der Karkasse auf der Mantelfläche des rotationssymmetrischen Aufbaukörpers jedoch vor oder während des Zurückfaltens des axial äußeren Erstreckungsbereichs der aufgelegten Karkassenlagen kann sehr einfach und individuell entsprechend den jeweiligen Erfordernissen an den zu fertigenden Fahrzeugluftreifen die ein gewünschter Verlauf der Festigkeitsträger des Umschlages der Karkasse eingestellt werden. Unerwünschte Veränderungen des Verlaufes aufgrund von Transport, Lagerung und Aufbau der Karkassenlagen auf die Aufbautrommel entfallen.

Besonders vorteilhaft ist das Verfahren gemäß den Merkmalen des Anspruchs 2, wobei im Aufbaukörper ein expandierbaren Balg ausgebildet ist, der sich über den gesamten Umfang des Aufbaukörpers erstreckt und einen Teil der Mantelfläche des Aufbaukörpers bildet, wobei beim Auflegen der Aufbaulagen zum Aufbau der Karkasse auf der Mantelfläche des rotationssymmetrischen Aufbaukörpers der axial äußere Erstreckungsbereich der aufgelegten Karkassenlage(n) auf der vom expandierbaren Balg gebildeten Mantelfläche des rotationssymmetrischen Aufbaukörpers aufgelegt wird, und wobei zum Zurückfalten des axial äußeren Erstreckungsbereichs der aufgelegten Karkassenlage(n) zur Bildung des Umschlages der expandierbare Balg von innen aufgebläht wird, dabei radial expandiert und den axial äußeren Erstreckungsbereich zurückfaltet.

Besonders vorteilhaft ist das Verfahren gemäß den Merkmalen des Anspruchs 3, wobei nach der Auflage der Aufbaulagen zum Aufbau der Karkasse auf der Mantelfläche des rotationssymmetrischen Aufbaukörpers der axial äußere Erstreckungsbereich der aufgelegten Karkassenlagen mit Haltemitteln auf einem Teilbereich der Mantelfläche des rotationssymmetrischen Aufbaukörpers festgehalten wird, wobei während des Haltens zumindest der Teilbereich des Aufbaukörpers, in dem die Haltemittel den axial äußeren Erstreckungsbereich der aufgelegten Karkassenlagen auf der Aufbautrommel festhalten, gegenüber dem Erstreckungsbereich des Aufbaukörpers, auf dem das Hauptteil der Karkasse aufliegt, gesteuert verdreht wird, und wobei anschließend die Festhaltewirkung der Haltemittel gelöst wird und danach der axial äußere Erstreckungsbereich der aufgelegten Karkassenlagen zur Bildung des Umschlages in Richtung des dazwischenliegenden Hauptteiles der Karkassenlagen zurückgefaltet wird. Auf diese Weise sind in besonders einfacher Weise sehr individuelle Einstellungen des Verlaufs der Festigkeitsträger im Umschlag der Karkasse mit hoher Präzision und Reproduzierbarkeit möglich. Durch einfache Wahl des Verdrehwinkels sind auch sehr kleine Losgrößen einfach uns schnell ohne große Umrüstungen individuell einstellbar.

Besonders vorteilhaft ist das Verfahren gemäß den Merkmalen des Anspruchs 4, wobei der expandierbare Balg während des Aufblähens mit seiner in Berührkontakt zum axial äußeren Erstreckungsbereich der aufgelegten Karkassenlage(n) befindlichen Balgoberfläche um die Achse des Aufbaukörpers gegenüber dem Erstreckungsbereich des Aufbaukörpers, auf dem das Hauptteil der Karkasse aufliegt, verdreht wird.

Besonders vorteilhaft ist das Verfahren gemäß den Merkmalen des Anspruchs 5, wobei der expandierbare Balg längs seiner axialen Erstreckung ausgehend von dem zum Hauptteil Karkasse weisenden axialen Anfang des Balges in der vom Balg gebildeten Mantelfläche während des Aufblähens mit seiner in Berührkontakt zum axial äußeren Erstreckungsbereich der aufgelegten Karkassenlagen befindlichen Balgoberfläche bis zur axialen Position der maximalen radialen Expansion auch zunehmend - insbesondere elastisch - in Umfangsrichtung des Balges gedehnt wird. Hierdurch lässt sich in einfacher Weise durch Wahl des Dehnungsverlaufes in Umfangsrichtung über seine axiale Erstreckung eine individuell gekrümmter Verlauf der Festigkeitsträger im Umschlag der Karkasse einstellen. Hierdurch ist die Herstellung mit einem Minimum an Schritten möglich. Zusätzliche Bauteile und Verfahrensschritte zur Verdrehung entfallen.

Die Erfindung wird im Folgenden an Hand der in den Figuren 1 bis 4 schematisch dargestellten Ausführungsbeispiele näher erläutert. Darin zeigen
- Fig. 1: a bis i schematische Darstellung zur Erläuterung der Herstellung in erster Ausführung mit Verdrehung der äußeren Trommelabschnitte
- Fig. 2: a bis f schematische Darstellung zur Erläuterung der Herstellung in zweiter Ausführung mit Verdrehung durch Balgverformung
- Fig. 3: Schnittdarstellung gemäß Schnitt III-III von Fig.2e zur Erläuterung der Balgverformung
- Fig. 4: Perspektivische Darstellung eines zur Verdrehung geeigneten Balges

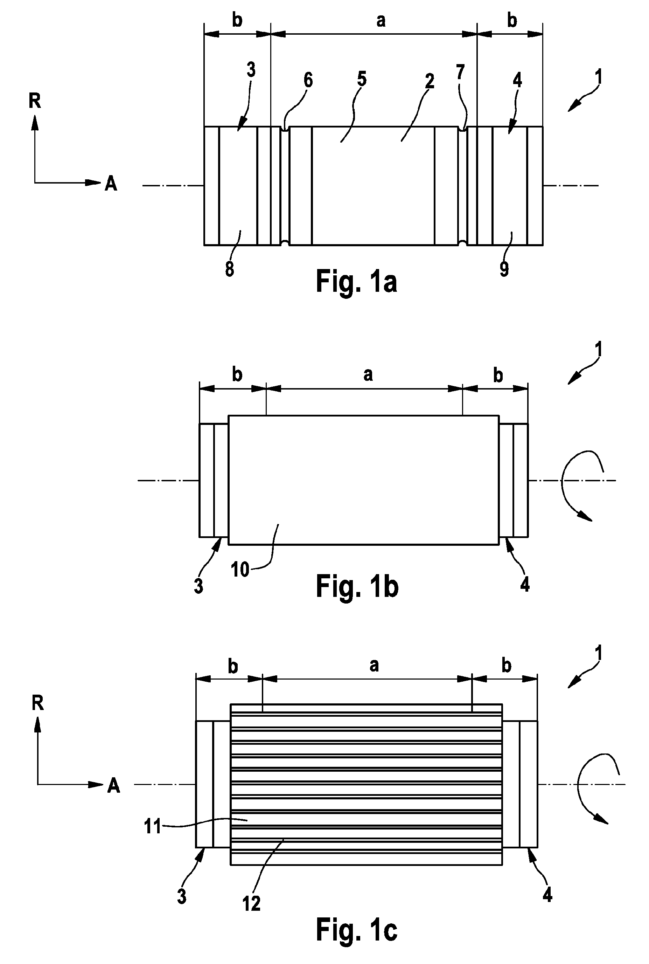

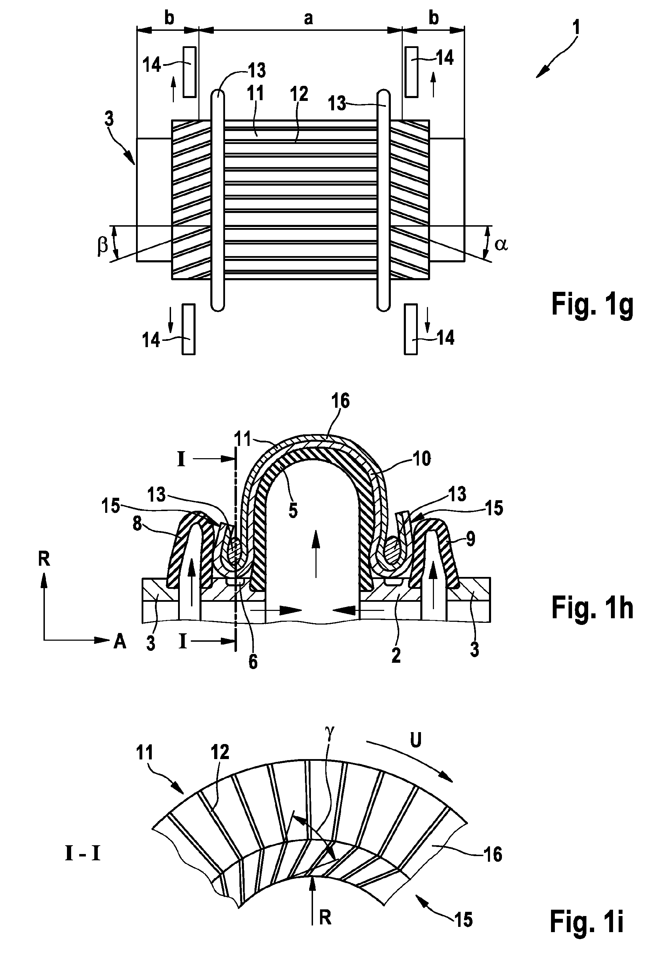

In den Figuren 1a bis 1i ist die Herstellung eines Reifenrohlings mit einer Karkasse 11 radialer Bauart und darin eingebetteten parallelen Festigkeitsträgern 12, mit einem Hauptteil 16 und mit in axialer Richtung A des Reifenrohlings jeweils beiderseits des Hauptteils 16 einem Umschlagsteil 15 (Fig. 1h) der Karkasse dargestellt.

Fig. 1a zeigt eine Aufbautrommel 1 zylindrischer Bauart mit einem mittleren Teil 2, der sich in axialer Richtung A über eine axiale Breite a erstreckt und mit zwei axial beiderseits des mittleren Teils 2 ausgebildeten Seitenteilen 3 und 4, die sich jeweils über eine axiale Erstreckungsbreite b erstrecken. Im mittleren Teil 2 der Aufbautrommel 1 ist in bekannter Weise ein elastischer Gummibalg 5 zur Expansion zwecks Ausformung des Reifens konzentrisch zur Trommelachse angeordnet ausgebildet. Axial beiderseits des Gummibalges 5 ist im mittleren Teil 2 der Aufbautrommel 1 in der radial äußeren zylindrischen Mantelfläche der Aufbautrommel 1 jeweils eine über den Umfang der Aufbautrommel 1 erstreckt als Aufnahmemulde ausgebildete nutförmige Vertiefung 6 bzw. 7 zur Aufnahme des Wulstkernes 13 des Fahrzeugluftreifens ausgebildet. In den beiden Seitenteilen 3 und 4 der Aufbautrommel 1 ist ebenfalls über den gesamten Umfang des Seitenteiles 3 bzw. 4 jeweils in bekannter Weise ein elastischer Gummibalg 8 bzw. 9 zum Herstellen des Karkassenumschlages ausgebildet. Die radial äußeren Oberflächen der Gummibälge 8, 9 und 5 sind im nicht expandierten Zustand Teil der zylindrischen Mantelfläche der Aufbautrommel 1. Die Aufbautrommel 1 ist mit ihren beiden Seitenteilen 3 und 4 sowie mit dem mittleren Teil 2 als rotatorisch verdrehbare Aufbautrommel 1 ausgebildet und in bekannter Weise mit einer nicht dargestellten Antriebs- und Steuereinheit bekannter Art verbunden. Mit Hilfe der Antriebs- und Steuereinheit bekannter Art kann die Aufbautrommel 1 als Ganzes, d.h. mit mittlerem Teil 2 und den beiden seitlichen Teilen 3 und 4, gesteuert rotatorisch angetrieben werden. Darüber können mit Hilfe der Antriebs- und Steuereinheit bekannter Art die beiden Seitenteile 3 und 4 wahlweise unabhängig vom Mittenteil 5 rotatorisch angetrieben werden, so dass die beiden Seitenteile 3 und 4 gesteuert gegenüber dem Mittenteil 2 verdreht werden können.

Zur Herstellung des Reifenrohlings wird zunächst eine vorgefertigten Kautschuklage aus besonders luftundurchlässigem Kautschukmaterial bekannter Art zur Bildung der Innenschicht 10 unter gesteuerter Verdrehung der gesamten Aufbautrommel 1 über den Umfang der Aufbautrommel 1in bekannter Weise aufgelegt. Dieser Zustand ist in Fig. 1b zu erkennen.

Im Anschluss daran wird in bekannter Weise die Karkasse 11 auf der Innenschicht 10 aufgebaut. Hierzu werden eine oder mehrere in bekannter Weise vorgefertigte Karkasslagen - das sind Kautschuklagen mit parallelen Festigkeitsträgern 12 - bei gesteuerter Rotation der Aufbautrommel 1 um deren Achse auf die radial äußere Mantelfläche der Aufbautrommel 1 direkt auf die radiale Außenseite der Innenschicht 10 - diese in ihrer vollständigen axialen Breite überdeckend - aufgelegt. Bei der Herstellung eines Reifens radialer Bauart weist die Karkasslage bzw. weisen die Karkasslagen der Karkasse 11 dabei parallele Festigkeitsträger 12 auf, die sich auf der Aufbautrommel 1 in axialer Richtung A der Aufbautrommel 1 über die gesamte Breite der Karkasslagen erstrecken. Dieser Zustand ist in Fig. 1c zu erkennen.

Die Innenschicht erstreckt sich mit ihrer axialen Breite - wie in Fig. 1b zu erkennen ist - wenigstens über den gesamten axialen Erstreckungsbereich zwischen den Vertiefungen 6 und 7. Die Karkasse 11 erstreckt sich - wie in Fig. 1c zu erkennen ist - mit ihrer axialen Breite über den gesamten axialen Erstreckungsbereich a des mittleren Teils 2 der Aufbautrommel 1 und der Erstreckungslänge des gewünschten Umschlags 15 im fertigen Reifen entsprechend bis in die beiden axialen Erstreckungsbereiche b der beiden Seitenteile 3 und 4 der Aufbautrommel 1 hinein.

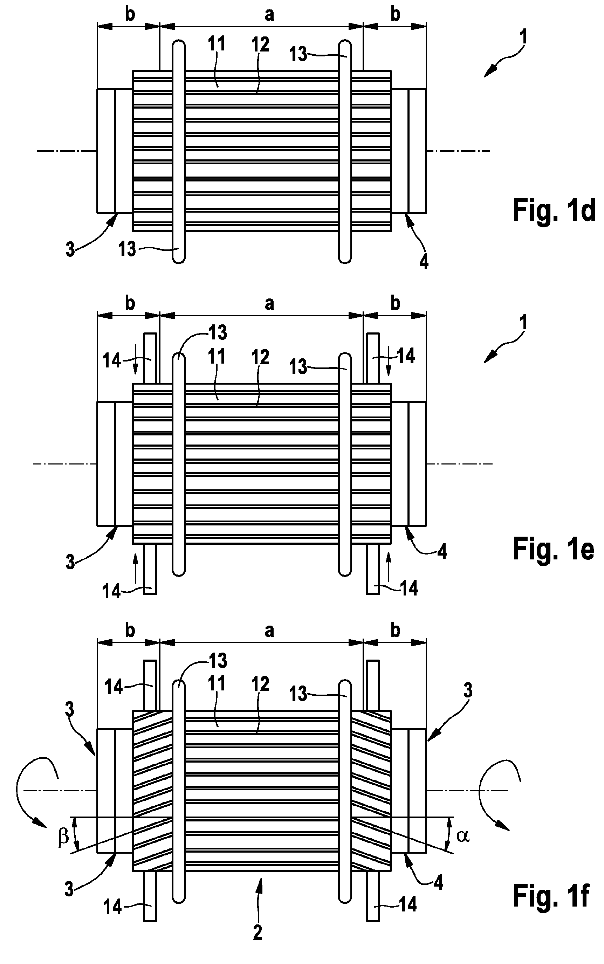

Nach Auflegen der Innenschicht 10 und der Karkasslage(n) der Karkasse 11 wird die Drehbewegung der Aufbautrommel 1 gestoppt. Von einer Position seitlich axial außerhalb der Aufbautrommel 1 werden die beiden vorgefertigten Wulstkemrohlinge 13 konzentrisch zur Aufbautrommel über die auf der Aufbautrommel aufgebaute Innenschicht und Karkasslage bis in die axiale Position der rillenförmigen Vertiefungen 6 bzw. 7 aufgeschoben und dort in bekannter Weise positioniert und fixiert. Dieser Zustand ist in Fig. 1d dargestellt.

Anschließend werden im axialen Erstreckungsbereich b der Seitenteile 3 und 4 der Aufbautrommel 1 jeweils mehrere über den Umfang der Aufbautrommel 1 gleichmäßig verteilte mechanische Haltefinger 14 von radial außen nach radial innen auf die auf den Seitenteilen 3 bzw. 4 aufliegenden Karkasslage(n) der Karkasse 11 soweit radial zu bewegt, bis diese einen haltenden Reibkontakt zwischen den Haltefingern 14 und der in sicherem Auflagekontakt zur Mantelfläche der Aufbautrommel befindlichen Karkasse hergestellt ist. Dieser Zustand ist in Fig.1e dargestellt.

Im Folgenden werden dann mit Hilfe der Steuereinheit lediglich die beiden Seitenteile 3 und 4 um die Achse der Aufbautrommel 1 gesteuert verdreht. Das Mittenteil 2 der Aufbautrommel 1 wird jedoch nicht mitverdreht. Die hierdurch bewegte relative Verdrehung zwischen Seitenteilen 3 und 4 und dem Mittelteil 2 bewirkt, dass die zwischen verdrehtem Seitenteil 2 bzw. Seitenteil 4 und den dabei mit verdrehten Haltefingern 14 unter Mitnahmekontakt festgehaltene Karkasse 11 in dem axialen Erstreckungsbereich axial außerhalb der Wulstkerne 13 gegenüber dem zwischen den Wulstkernen 13 ausgebildeten mittleren Bereich der Karkasse 11 ebenfalls verdreht wird, wodurch die Festigkeitsträger 12 der Karkasse 11 eine Neigung α auf dem in der Figur rechten Seitenteil 4 bzw. β auf dem in der Figur linken Seitenteil 3 zur axialen Richtung A erhalten.

Der Neigungswinkel α bzw. β ist dabei abhängig vom Maß der relativen Verdrehung des rechten Seitenteils 4 gegenüber dem Mittenteil 2 bzw. vom Maß der relativen Verdrehung des linken Seitenteils 3 gegenüber dem Mittenteil 2 und wird durch die gesteuerte Drehbewegung entsprechend dem gewünschten Neigungswinkel gezielt eingestellt. Dieser Zustand ist in Fig. 1f zu erkennen.

Nach Einstellung der gewünschten Neigungswinkel α und β wird die relative Rotationsbewegung der Seitenteile 3 und 4 gegenüber dem Mittelteil 2 gestoppt. Wie in Fig. 1g zu erkennen ist, werden dann die Haltefinger 14 dann nach radial außen von der Oberfläche der Karkasse 11 entfernt.

Im Anschluss wird in herkömmlicher bekannter Weise durch gesteuertes radiales Expandieren des Gummibalges 5 bei gleichzeitigem gesteuertem axialem Zusammenführen der axial außerhalb des Gummibalges 5 befindlichen, die Aufnahmenuten 6 und 7 aufweisenden Wulstkemstützbereiche des mittleren Teiles 2 der Aufbautrommel 1 der Reifenrohling bombiert, wodurch der Reifenrohling seine Torusform erhält. Gleichzeitig werden die in den Seitenteilen 3 und 4 der Aufbautrommel 1 ausgebildeten Gummibälge 8 und 9 in bekannter Weise gesteuert radial expandiert, wodurch in bekannter Weise der auf ihnen aufliegende axial außerhalb der Wulstkerne 13 erstreckte Karkassenbereich jeweils von axial außen um den jeweiligen Wulstkern 13 in Richtung des zwischen den beiden Wulstkernen 13 befindlichen Hauptteiles 16 der Karkasse 11 umgeschlagen und somit zurückgefaltet wird. Dies ist schematisch in Fig. 1h dargestellt.

Der Reifenrohling weist nun, wie in Fig.1h und Fig.1i zu erkennen ist, eine Karkasse 11 mit Hauptteil 16 und zwei Umschlägen 15 auf, wobei die Festigkeitsträger 12 im Erstreckungsbereich des Hauptteils 16 der Karkasse 11 im wesentlichen in radialer Richtung R verlaufen und im Bereich des einen Umschlages 15 unter einem in Fig. 1i an einer Reifenseite dargestellten Winkel γ zur Umfangsrichtung U des Reifenrohlings bzw. im Bereich des anderen Umschlages 15 an der anderen Reifenseite unter einem nicht dargestellten Winkel δ zur Umfangsrichtung U des Reifenrohlings. Der Winkel γ und der Winkel δ ergeben sich dabei unmittelbar aus dem jeweils durch das Verdrehen der Seitenteile 3 bzw. 4 eingestellten Winkel β bzw. α mit
γ = (90° - β) und δ = (90° - α).

In einem Ausführungsbeispiel ist α = β = 30° gewählt. Der in beiden Umschlägen 15 der Karkasse 11 des Reifenrohlings hierdurch erzielte Neigungswinkel δ bzw. γ zur Umfangsrichtung U in dem jeweiligen Umschlag 15 gibt sich dann zu
δ = γ = (90° - β) = 60°.

In einem anderen Ausführung ist α > β gewählt. Hierdurch ergibt sich der Neigungswinkel γ = (90° - β) im einen Umschlag 15 und der Neigungswinkel δ im anderen δ = (90° - α) mit δ < γ.

Die weitere nicht dargestellte Reifenherstellung entspricht den herkömmlichen, bekannten Schritten zur weiteren Reifenherstellung. Dabei wird in bekannter, nicht dargestellter Weise auf die radial äußere Oberfläche des Reifenrohlings ein Gürtel oder ein Gürtelpaket mit einer oder mehreren Gürtellagen von in Kautschuk eingebetteten parallelen für Gürtel bekanntermaßen geeigneten Festigkeitsträgern und ggfs. eine Gürtelbandage oder eine Gürtelabdeckung mit in Umfangsrichtung ausgerichteten hierfür als geeignet bekannten Festigkeitsträgern sowie ein Laufstreifen aus bekannter Laufstreifenmischung aufgelegt. Auf die im radialen Erstreckungsbereich zwischen Laufstreifen und Reifenwulst wird auf die axiale Außenseite des Reifens ein Seitenwandgummistreifen bekannter Art in herkömmlicher Weise auf die Karkasse 11 aufgelegt. Der fertige Reifenrohling wird in bekannter Weise in einer herkömmlichen Vulkanisationsform mit dem Reifenprofil versehen, ausgeformt und vulkanisiert.

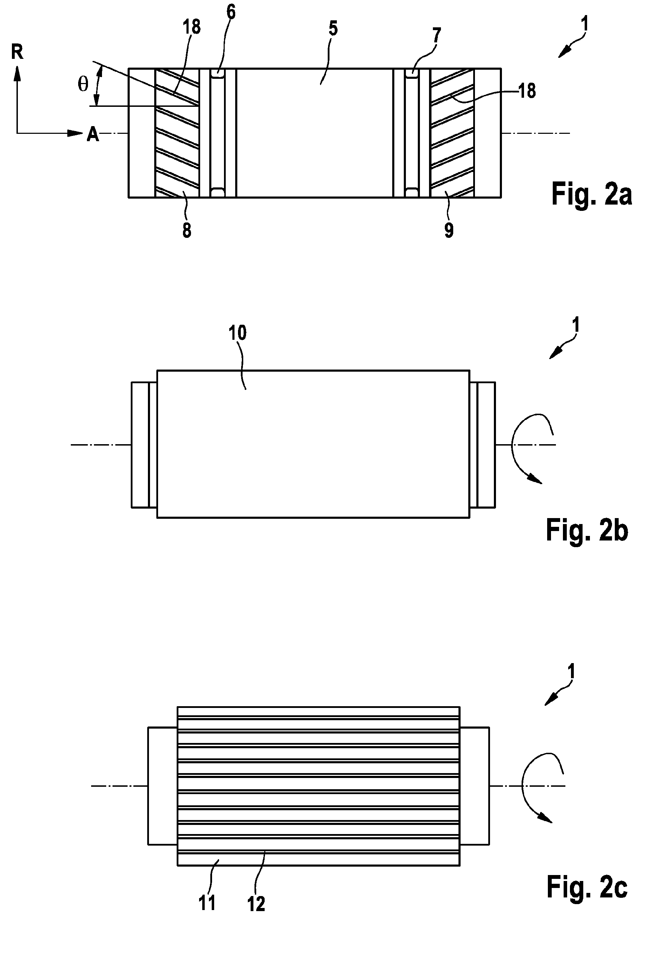

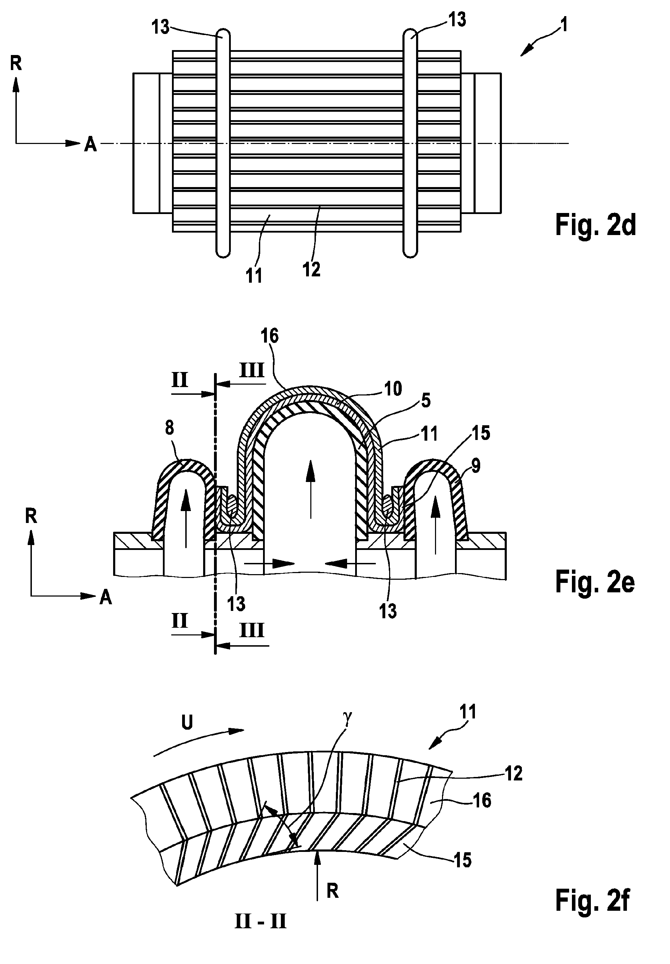

Fig. 2a bis Fig. 2e zeigen eine alternative Art der Herstellung eines Reifenrohlings mit Umschlag 15 und Hauptteil 16 der Karkasse 11. Die in Fig. 2a dargestellte Aufbautrommel ist eine herkömmliche Aufbautrommel 1 mit zylindrischer Mantelfläche mit zwei axial voneinander beabstandet als Umfangsnuten ausgebildeten Aufnahmemulden 6 und 7 zur Aufnahme der beiden Wulstkerne13, mit einem zwischen den beiden Aufnahmemulden 6 und 7 ausgebildeten elastischen Gummibalg 5 bekannter Art und mit zwei axial außerhalb der Aufnahmemulden 6 und 7 ausgebildeten elastischen Gummibälgen 8 und 9 zum Umschlagen 15 der Karkasse 11. Die in den Figuren 2b, 2c und 2d dargestellten Herstellungsschritte entsprechen den im Zusammenhang mit den Figuren 1b, 1c und 1d erläuterten Herstellungsschritten, wobei zunächst eine Innenschicht 10, dann die Karkasse 11 mit Festigkeitsträgern 12 aufgelegt und danach die beiden Wulstkerne 13 in der axialen Position der Aufnahmemulden 6 und 7 aufgeschoben, positioniert und fixiert werden. Danach wird - wie im Zusammenhang mit Fig.1a beschrieben - der Reifenrohling durch radiale Expansion des Gummibalges 5 und gleichzeitiges axiales Zusammenfahren der die Wulstkerne 13 stützenden Auflagetrommelbereiche bombiert. Durch radiale Expansion der Gummibälge 8 und 9 werden die axial zur Bildung der Umschläge 15 außerhalb der Wulstkerne 13 erstreckten Karkassenbereiche auf der axialen Außenseite der Wulstkerne 13 um die Wulstkerne 13 herum in Richtung zu dem zwischen den Wulstkernen 13 befindlichen Hauptteil 16 der Karkasse 11 zur Bildung des jeweiligen Umschlages 15 zurückgefaltet (Fig.2e).

Wie in Fig. 2a zu erkennen ist, sind die Gummibälge 8 bzw. 9 mit in Kautschukmaterial eingebetteten parallelen Festigkeitsträgern 18 ausgebildet, die sich im nicht expandierten Zustand über die gesamte axiale Erstreckung des jeweiligen Gummibalges 8 bzw. 9 erstrecken und dabei von axial innen nach axial außen in Richtung zur jeweils nächstgelegenen Stirnseite der Aufbautrommel 1 gesehen unter einem Neigungswinkel θ zur axialen Richtung A der Aufbautrommel 1 verlaufen.

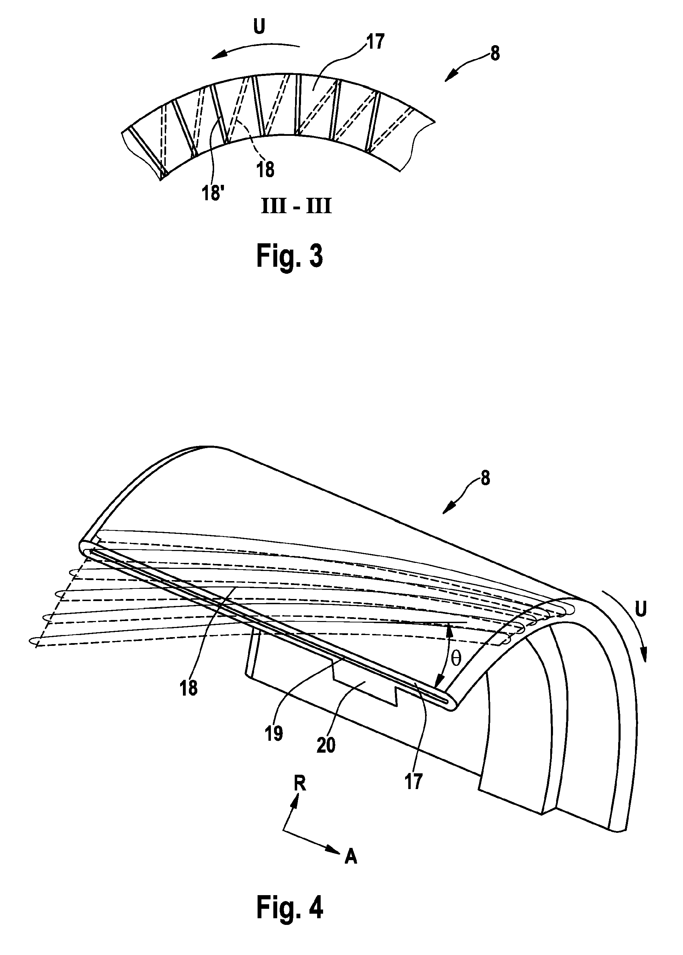

Wie in Fig. 3 dargestellt ist, werden die Festigkeitsträger 18 der Gummibälge 8 bzw. 9 bei der in Fig. 2e dargestellten radialen Erhebung der Gummibälge 8 bzw. 9 im Gummibalg 8 bzw. 9 jeweils aufgrund der Dehnung des Gummimaterials mit einer längs ihrer Erstreckung ausgehend von der axial zu dem benachbarten Wulstkern 13 weisenden Seite des Gummibalges 8 bzw. 9 nach axial außen zur nächstgelegenen Stirnseite der Aufbautrommel 1 hin zunehmenden Umfangsrichtungskomponente in eine Position 18' verschoben. Auf diese Weise erfolgt während der radialen Expansion des Gummibalges 8 bzw. 9 auch eine elastische Verdrehung des Gummibalges 8 bzw. 9 um die Achse der Aufbautrommel 1 mit längs seiner in Fig. 2e dargestellten radialen Erstreckung zunehmendem Verdrehungswinkel.

Während der radialen Expansion wird somit durch diese Verdrehung des radial äußeren auch die auf der äußeren Oberfläche des Gummibalges 8 bzw. 9 aufliegende Karkasse 11 mit um die Achse der Aufbautrommel 1 verdreht. Wie in Fig. 2e und Fig.2f dargestellt ist, ist der bombierte Reifenrohling mit einer Karkasse 11 mit einem Hauptteil 16 und einem Umschlag 15 der Karkasse 11 ausgebildet, wobei die Festigkeitsträger 12 der Karkasse im Hauptteil 16 der Karkasse 11 im Wesentlichen in radialer Richtung R und im Umschlag 15 unter einem Neigungswinkel γ zur Umfangsrichtung U verlaufen.

Der Winkel γ des Umschlags 15 ist bei diesem Ausführungsbeispiel durch die Wahl des geeigneten Gummibalges 8 bzw. 9 und speziell der darin angeordneten und orientierten Festigkeitsträger einstellbar.

Fig. 4 zeigt eine beispielhafte Ausführung eines Gummibalges 8, mit dem eine derartige Einstellung des Winkel γ des Umschlags 15 der Karkasse eingestellt wird . Der Gummibalg 8 ist ein herkömmlicher schlauchförmiger Gummibalg 8 bekannter Art mit einem nach radial innen ausgerichteten ringförmigen Verdickung 20 zur Befestigung des Gummibalges 8 in der Aufbautrommel 1. In Umfangsrichtung U des Gummibalges 8 hintereinander angeordnet und gleichmäßig im Gummimaterial 17 des Gummibalges 8 verteilt sind ringförmige Festigkeitsträger 18 bekannter Art ausgebildet, die sich jeweils um den vom schlauchförmiger Gummibalg 8 umhüllten Hohlraum 19 ringförmig erstrecken, wobei sie jeweils sowohl im in der Aufbautrommel oberhalb des umhüllten Hohlraums 19 als auch unterhalb des vom schlauchförmiger Gummibalg 8 umhüllten Hohlraum 19 im nicht aufgeblasenen Zustand des schlauchförmiger Gummibalg 8 von der einen axialen Erstreckungsseite des schlauchförmiger Gummibalg 8 bis zur anderen axialen Erstreckungsseite jeweils unter einem Winkel θ zur axialen Richtung A ausgerichtet sind.

In einer nicht dargestellten alternativen Ausführung wird bei dem in den Fig.1a bis Fig.1i dargestellten Verfahren mit gegenüber einem mittleren Teil 2 der Aufbautrommel 1rotatorisch gesteuert verdrehten Seitenteilen 3 und 4 zusätzlich der Gummibalg 8 und/oder der Gummibalg 9 - wie bei den zu den Fig.2a bis Fig.2e dargestellten Verfahren - bei der radialen Expansion längs seiner Erstreckung elastisch verdreht ausgebildet.

In den oben beschriebenen Ausführungsbeispielen ist der mittlere Teil der Aufbautrommel 1 jeweils mit einem Gummibalg 5 zur radialen Expansion des Hauptteils der Karkasse ausgebildet. In anderer - nicht dargestellter - Ausbildung ist im mittleren Teil 2 anstelle eines Gummibalges 5 in bekannter Weise eine mechanische Expansionseinrichtung bekannter Art - beispielsweise mit radial expandierbaren Trommelsegmenten - ausgebildet. In weiterer alternativer Ausbildung erfolgt die radiale Expansion des Hauptteils der Karkasse in bekannter Weise balglos nur mit Hilfe von gesteuert erhöhtem Innendruck.

### Bezugszeichenliste (Teil der Beschreibung)

- 1: Aufbautrommel
- 2: mittlerer Teil
- 3: Seitenteil
- 4: Seitenteil
- 5: Gummibalg
- 6: nutförmige Aufnahmemulde für Wulstkern
- 7: nutförmige Aufnahmemulde für Wulstkern
- 8: Gummibalg
- 9: Gummibalg
- 10: Innenschicht
- 11: Karkasse
- 12: Festigkeitsträger
- 13: Wulstkern
- 14: Haltefinger
- 15: Umschlag
- 16: Hauptteil
- 17: Gummimaterial
- 18: Festigkeitsträger
- 19: Hohlraum
- 20: Verdickung

## Patentansprüche

1. Verfahren zur Herstellung eines Fahrzeugluftreifens mit Laufstreifen, mit zwei Reifenseitenwänden, mit zwei Reifenwülsten und mit einer Karkasse (11) aus einer oder mehreren Lagen von in Kautschuk eingebetteten parallelen Festigkeitsträgern (12), die sich mit einem Hauptteil (16) der Karkasse (11) jeweils aus dem Erstreckungsbereich des Laufstreifens nach radial innen durch eine Reifenseitenwand hindurch bis in den Reifenwulst und in deren Verlängerung mit einem umgeschlagenen Teil (15) der Karkasse vom Reifenwulst nach radial außen erstreckt, wobei die Aufbaulage(n) zum Aufbau der Karkasse (11) auf der Mantelfläche eines rotationssymmetrischen Aufbaukörpers (1) aufgelegt werden, so dass sie sich über den gesamten Umfang des Aufbaukörpers (1) erstrecken, und wobei danach zumindest einer der beiden axial äußeren Erstreckungsbereiche der aufgelegten Karkassenlage(n) zur Bildung des Umschlages (15) in Richtung des dazwischenliegenden Hauptteiles (16) der Karkassenlagen zurückgefaltet wird,
**dadurch gekennzeichnet,**
**dass** nach der Auflage der Aufbaulage(n) zum Aufbau der Karkasse (11) auf der Mantelfläche des rotationssymmetrischen Aufbaukörpers (1) jedoch vor oder während des Zurückfaltens des axial äußeren Erstreckungsbereichs der aufgelegten Karkassenlage(n) der axial äußere Erstreckungsbereich der aufgelegten Karkassenlage(n) gegenüber dem zwischen den axial äußeren Erstreckungsbereichen liegenden Hauptteil (16) der Karkasse (11) - insbesondere gesteuert - um die Achse des Aufbaukörpers (1) verdreht wird.

2. Verfahren zur Herstellung eines Fahrzeugluftreifens gemäß den Merkmalen von Anspruch 1,
wobei im Aufbaukörper (1) ein expandierbarer Balg (8,9) ausgebildet ist, der sich über den gesamten Umfang des Aufbaukörpers (1) erstreckt und einen Teil der Mantelfläche des Aufbaukörpers (1) bildet,
wobei beim Auflegen der Aufbaulagen zum Aufbau der Karkasse (11) auf der Mantelfläche des rotationssymmetrischen Aufbaukörpers (1) der axial äußere Erstreckungsbereich der aufgelegten Karkassenlage(n) auf der vom expandierbaren Balg (8,9) gebildeten Mantelfläche des rotationssymmetrischen Aufbaukörpers (1) aufgelegt wird, und
wobei zum Zurückfalten des axial äußeren Erstreckungsbereichs der aufgelegten Karkassenlage(n) zur Bildung des Umschlages (15) der expandierbare Balg (8,9) von innen aufgebläht wird, dabei radial expandiert und den axial äußeren Erstreckungsbereich zurückfaltet.

3. Verfahren zur Herstellung eines Fahrzeugluftreifens gemäß den Merkmalen von einem oder mehreren der vorangegangenen Ansprüche,
wobei nach der Auflage der Aufbaulagen zum Aufbau der Karkasse (11) auf der Mantelfläche des rotationssymmetrischen Aufbaukörpers (1) der axial äußere Erstreckungsbereich der aufgelegten Karkassenlagen mit Haltemitteln (14) auf einem Teilbereich der Mantelfläche des rotationssymmetrischen Aufbaukörpers (1) festgehalten wird, wobei während des Haltens zumindest der Teilbereich (3,4) des Aufbaukörpers (1), in dem die Haltemittel (14) den axial äußeren Erstreckungsbereich der aufgelegten Karkassenlagen auf der Aufbautrommel (1) festhalten, gegenüber dem Erstreckungsbereich des Aufbaukörpers (1), auf dem das Hauptteil (16) der Karkasse (11) aufliegt, gesteuert verdreht wird, und wobei anschließend die Festhaltewirkung der Haltemittel (14) gelöst wird und danach der axial äußere Erstreckungsbereich der aufgelegten Karkassenlagen zur Bildung des Umschlages (15) in Richtung des dazwischenliegenden Hauptteiles (16) der Karkassenlagen zurückgefaltet wird.

4. Verfahren zur Herstellung eines Fahrzeugluftreifens gemäß den Merkmalen von Anspruch 2,
wobei der expandierbare Balg (8,9) während des Aufblähens mit seiner in Berührkontakt zum axial äußeren Erstreckungsbereich der aufgelegten Karkassenlagen befindlichen Balgoberfläche um die Achse des Aufbaukörpers (1) gegenüber dem Erstreckungsbereich des Aufbaukörpers (1), auf dem das Hauptteil der Karkasse aufliegt, verdreht wird.

5. Verfahren zur Herstellung eines Fahrzeugluftreifens gemäß den Merkmalen von Anspruch 2,
wobei der expandierbare Balg (8,9) längs seiner axialen Erstreckung ausgehend von dem zum Hauptteil (16) der Karkasse (11) weisenden axialen Anfang des Balges (8,9) in der vom Balg (8,9) gebildeten Mantelfläche während des Aufblähens mit seiner in Berührkontakt zum axial äußeren Erstreckungsbereich der aufgelegten Karkassenlagen befindlichen Balgoberfläche bis zur axialen Position der maximalen radialen Expansion auch - insbesondere elastisch - in Umfangsrichtung U des Balges (8,9) gedehnt wird.

6. Vorrichtung zur Herstellung eines Fahrzeugluftreifens mit Laufstreifen, mit zwei Reifenseitenwänden, mit zwei Reifenwülsten und mit einer Karkasse (11) aus einer oder mehreren Lagen von in Kautschuk eingebetteten parallelen Festigkeitsträgern (12), die sich mit einem Hauptteil (16) der Karkasse (11) jeweils aus dem Erstreckungsbereich des Laufstreifens nach radial innen durch eine Reifenseitenwand hindurch bis in den Reifenwulst hindurch erstreckt und in deren Verlängerung mit einem umgeschlagenen Teil vom Reifenwulst nach radial außen erstreckt, mit einem rotationssymmetrischen Aufbaukörper (1), der um seine Rotationsachse drehbar in der Vorrichtung gelagert und mit gesteuerten Antriebsmitteln zum gesteuerten Verdrehen des Aufbaukörpers um seine Antriebsachse in Antriebsverbindung bringbar ist oder steht, mit Mitteln zum Auflegen der Aufbaulagen zum Aufbau der Karkasse (11) auf der Mantelfläche des rotationssymmetrischen Aufbaukörpers (1) derart, dass diese sich über den gesamten Umfang des Aufbaukörpers (1) erstrecken, und mit gesteuerten Mitteln zum Zurückfalten des axial äußeren Erstreckungsbereichs der aufgelegten Karkassenlagen zur Bildung des Umschlages (15) in Richtung des dazwischenliegenden Hauptteiles (16) der Karkassenlage(n),
mit Mitteln zum - insbesondere gesteuerten - Verdrehen des axial äußeren Erstreckungsbereichs der aufgelegten Karkassenlagen gegenüber dem dazwischen liegenden Hauptteil der Karkasse um die Achse des Aufbaukörpers (1) nach der Auflage der Aufbaulagen zum Aufbau der Karkasse (11) auf der Mantelfläche des rotationssymmetrischen Aufbaukörpers (1) jedoch vor oder während des Zurückfaltens.
